# EUROPÄISCHE PATENTSCHRIFT

(11) **EP 4 027 333 B1**
(45) Veröffentlichungstag und Bekanntmachung des Hinweises auf die Patenterteilung: **19.07.2023**
(21) Anmeldenummer: 21150542.5
(22) Anmeldetag: 07.01.2021
(51) Int. Cl.: G10L 15/20, G10L 21/0208, G10L 21/0216, G10L 15/22, G10L 17/00

(54) **VIRTUELLER SPRACHASSISTENT MIT VERBESSERTER ERKENNUNGSGENAUIGKEIT**
VIRTUAL SPEECH ASSISTANT WITH IMPROVED RECOGNITION ACCURACY
ASSISTANT VOCAL VIRTUEL À PRÉCISION DE RECONNAISSANCE AMÉLIORÉE

(43) Veröffentlichungstag der Anmeldung: 13.07.2022
(73) Patentinhaber: Deutsche Telekom AG, 53113 Bonn (DE)
(72) Erfinder: El Mallouki, Said, 56329 St. Goar (DE); Jahn, Carl, 65191 Wiesbaden (DE); Minow, Jascha, 64625 Bensheim (DE); Platschek, Martin Michael, 13347 Berlin (DE)
(74) Vertreter: Braun-Dullaeus Pannen Emmerling Patent- & Rechtsanwaltspartnerschaft mbB

(56) Entgegenhaltungen:
- US-A1- 2013 085 753
- US-A1- 2013 173 267
- US-A1- 2014 025 374
- US-A1- 2016 260 426
- US-A1- 2018 182 392
- US-A1- 2018 350 379
- US-A1- 2019 179 610
- US-B1- 9 558 749

## Beschreibung

Die Erfindung betrifft ein Verfahren zur Verbesserung der Erkennungsgenauigkeit eines virtuellen Sprachassistenten. Zudem betrifft die Erfindung ein Endgerät auf dem der virtuelle Sprachassistenten installiert ist sowie ein Computerprogramm Produkt, das auf dem die wesentlichen Schritte des Verfahrens hinterlegt sind.

Sprachgesteuerte virtuelle Assistenten finden in das alltägliche Leben immer mehr Einzug und sind demnach auch vielmehr "verschiedenartigen" Situationen ausgesetzt, die ganz verschiedene Umgebungsgeräusche bedingen können. Beispielsweise werden virtuelle Sprachassistenten zu Hause im Wohnzimmer, unterwegs im Auto mit einer Freisprechanlage oder auch an öffentlichen Orten bei Headsets oder direkt per Push-to-Talk von Nutzern verwendet. Verschiedene Umgebungsgeräusche von verschiedenen Quellen, wie etwa von einem TV, einem Radio, der Straße, Freisprechanlage usw., und verschiedene Stimmen verschiedene Stimmen können hierbei die Spracherkennung deutlich beeinträchtigen und führen häufig zu ungewollten Eingaben, respektive Befehlen.

Ein Beispiel für ein Gerät, das einen virtuellen Sprachassistenten darstellen und Sprachbefehle eines Nutzers erkennen kann, ist in der US 9,558,749 B1 beschrieben.

Die zurzeit verbreiteten virtuellen Sprachassistenten sind nur ungenügend in der Lage eine solche Vielzahl von Geräuschen in einem einzigen Audiosignal "richtig" zu verarbeiten. So können diese Sprachassistenten nicht feststellen, wer spricht, woher die Stimme stammt, ob es eine bewusste Ansprache des Assistenten ist oder ob lediglich eine Person im Hintergrund spricht. Hierdurch kommt es zu fehlerhaften Erkennungen, die dazu führen, dass entweder keine Sprachbefehle ausgeführt werden, obwohl dies gewünscht wird, oder dass falsche Sprachbefehle ausgeführt werden. Aktuelle virtuelle Sprachassistenten begegnen diesem Problem lediglich mittels den Techniken des "Beamforming" oder des "Noise-Cancelling". Umfasst das Audiosignal jedoch Geräusche bzw. Stimmen aus einer bestimmten Richtung oder ist die Hintergrundstimme lauter als die des Sprechers (beispielsweise bei Ansagen am Bahnhof) scheitern diese beiden Kompensationsmethoden in der Regel. Dies findet der Nutzer des virtuellen Sprachassistenten selbstverständlich als unbefriedigend. Für ihn ist es häufig nicht ersichtlich, wieso das System nicht in der Lage war, den Sprachbefehl auszuführen.

Es ist daher die Aufgabe der Erfindung Techniken anzugeben, die es dem virtuellen Sprachassistenten ermöglichen Audiosignale mit einer erhöhten Effizienz, respektive Erkennungsgenauigkeit, zu analysieren und dadurch die Ergebnisse zu verbessern.

Gelöst wird diese Aufgabe mit den Merkmalen der unabhängigen Ansprüche. Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt und sofern der sich ergebende Gegenstand in den Schutzbereich der Ansprüche fällt.

Erfindungsgemäß ist ein Verfahren zur Verbesserung der Erkennungsgenauigkeit eines virtuellen Sprachassistenten bei Sprachbefehlen eines Nutzers angegeben, wobei der virtuelle Sprachassistent auf einem Endgerät des Nutzers implementiert ist und mit einem Mikrofon des Endgeräts die Sprachbefehle des Nutzers empfängt. Das Verfahren umfasst die folgenden Schritte:
- Aufzeichnen eines empfangenen Audiosignals durch das Mikrofon des Endgeräts und Speichern des empfangenen Audiosignals in einer Speichereinheit;
   o mögliche Endgeräte auf denen der virtuelle Sprachassistenten implementiert ist können sein: ein Smartphone, ein Tablet, ein intelligenter Lautsprecher, ein Computer, ein Fahrzeug und/oder ein Wearable. Die Speichereinheit kann auf dem Endgerät und/oder auf einem Server in einem Kommunikationsnetz vorgesehen sein. In dem Fall, dass die Speichereinheit auf dem Server installiert ist, muss das durch das Mikrofon überfragende Audiosignal noch über eine Datenverbindung des Kommunikationsnetzes an den Server übertragen werden.
- Übergeben des empfangenen Audiosignals an einen auf einer Recheneinheit implementierten Algorithmus als Input;
- Analysieren des Audiosignals mittels des Algorithmus, wobei der Algorithmus eingerichtet ist, eine Analyse des eingehenden Audiosignals durchzuführen und hierbei zu ermitteln, welche Bestandteile des Audiosignals von dem Nutzer stammen und ein reduziertes Audiosignal als Output auszugeben;
   o hierbei wird das Audiosignal nach der entsprechenden Analyse so bearbeitet, dass Bestandteile des Audiosignals detektiert werden, die mit einem vorher festgelegten Wahrscheinlichkeitswert dem Nutzer zuzuordnen sind. Die anderen Bestandteile des Audiosignals, die unter diesem Wahrscheinlichkeitswert liegen, werden durch den Algorithmus als nicht-relevant markiert. Das reduzierte Audiosignal wird dann aus denen Bestandteilen zusammengesetzt, die über dem zuvor festgelegten Wahrscheinlichkeitswert liegen. Vorzugsweise erfolgt die Zusammensetzung in der chronologischen Reihenfolge, in der die einzelnen Bestandteile in dem ursprünglichen Audiosignal vorzufinden sind. Das reduzierte Audiosignal weist demnach weniger Audio Informationen als das ursprüngliche Audiosignal auf und wird deswegen als reduziertes Audiosignal bezeichnet. Prinzipiell, hierauf wird nachstehend noch eingegangen, können verschiedene Stufen des reduzierten Audiosignals erzeugt werden, wobei jede weitere Stufe eine weitere Reduzierung bezüglich der vorherigen Stufe darstellt.
- Extrahieren zumindest eines Sprachebefehls für den virtuellen Sprachassistenten aus dem reduzierten Audiosignal.

Dies bietet den Vorteil, dass es Verfahren in der Lage ist, ähnlich wie es Menschen völlig natürlich können, irrelevante Geräusche und irrelevante Sprecher auszublenden, sodass lediglich Audiosignale des Nutzers in dem reduzierten Audiosignal verbleiben, die mit einer hohen Wahrscheinlichkeit Grundlage für die Ausführung der Sprachbefehle darstellen. Hierdurch werden fehlerhafte Sprachbefehle vermieden und der virtuelle Sprachassistenten kann entsprechend den Wünschen des Nutzers funktionieren. Im Prinzip stellte diese Lösung eine Audio-Segregation des eingehenden Audiosignals im Hinblick auf die Herkunft der Audiosignale dar. Vorzugsweise wird eine Echtzeitanalyse durchgeführt, da der Nutzer nicht lange auf die Ausführung der Sprachbefehle warten möchte. Es werden also irrelevante Komponenten des Audiosignals, unter Umständen in mehreren Schritten, entfernt und bei der Verarbeitung des Sprachbefehls eliminiert. Selbst wenn es nicht möglich sein sollte alle Audiosignale, die nicht für den Nutzer stammen zu eliminieren, so wird dennoch die Erkennungsgenauigkeit durch dieses Verfahren deutlich erhöht.

Bevorzugt ist zumindest eine der folgenden Analysenmethoden in dem Algorithmus implementiert:
- Vergleichsanalyse mit einem hinterlegten Sprachprofil des Nutzers;
   o das Sprachprofil des Nutzers wird aus vorherigen Spracheingaben des Nutzers generiert. Bevorzugt werden hierzu Spracheingaben des Nutzers verwendet, die ohne Hintergrundgeräusche getätigt wurden, sodass ein möglichst reines Sprachprofil des Nutzers erstellt werden kann. Jede Stimme weist typische Charakteristika auf, wie etwa Sprachmelodie, Tonlage, Frequenzen und/oder Eigentümlichkeiten der Aussprache, die einzeln oder in beliebiger Kombination verwendet werden können, um das Sprachprofil des Nutzers auszubilden. Das Sprachprofil des Nutzers kann nun mit dem Audiosignal verglichen werden, wobei die Bereiche herausgefiltert werden, die mit einer vorgegebenen Wahrscheinlichkeit dem Sprachprofil des Nutzers entsprechen. Das Sprachprofil kann auf dem Endgerät und/oder dem Server hinterlegt werden und beispielsweise mittels einem maschinellen Lernverfahren generiert und stetig verbessert werden. Diese Methode ist besonders gut geeignet, wenn immer derselbe Nutzer den virtuellen Sprachassistenten des Endgeräts nutzt.
- Frequenzanalyse;
   o nach Eingang des Audiosignals wird das Audiosignal von dem Algorithmus zunächst in Frequenzbereiche unterteilt, die für eine menschliche Stimme typisch sind, die demnach Audiosignale des Nutzers enthalten können (ca. 500 Hz bis 4,5 kHz), und in restliche Frequenzbereiche, die beispielsweise von Hintergrundgeräuschen stammen können. Dies wird auch als Bandbreitenanalyse bezeichnet. Hierdurch wird also eine besonders effiziente Möglichkeit bereitgestellt, um Hintergrundgeräusche aus dem Audiosignal herauszufinden. Insbesondere ist diese Methode auch dann geeignet, wenn ein anderer als der regelmäßige Nutzer, das Endgerät für einen Sprachbefehl an den virtuellen Sprachassistenten benutzt.
- Beamforming-Analyse;
   o durch die Beamforming-Analyse wird in dem Audiosignal die Richtung ermittelt aus der die entsprechenden Signale, aus dem sich das Audiosignal zusammensetzt, gekommen sind. Hierbei gibt es Richtungen, die mit einer höheren Wahrscheinlichkeit als von dem Nutzer kommend bestimmt werden können als andere. Die Richtungen, die mit einer zuvor festgelegten Wahrscheinlichkeit für den Nutzer kommen, werden beibehalten, die anderen aussortiert und für das reduzierte Audiosignal nicht in Betracht gezogen. Dieses Verfahren ist besonders gut geeignet, wenn der Nutzer sich beispielsweise immer relativ zu dem Endgerät an einer bestimmten Position befindet, wenn er die Sprachbefehle gibt.
- Positions-Analyse;
   o die örtliche Position von einem Endgerät kann beispielsweise durch dessen GPS-Koordinaten, die typischerweise von dem Endgerät selbst erhoben werden, bestimmt werden. Mittels eines Abgleichs von einer zu einem bestimmten Zeitpunkt ermittelten örtlichen Position mit hinterlegtem oder im Internet verfügbarem Kartenmaterial, kann die räumliche Umgebung des Nutzers näher bestimmt werden. Konkret: Ergibt die Analyse, dass sich der Nutzer an derselben GPS-Position wie ein Bahnhof befindet, dann ist es wahrscheinlich, dass das empfangene Audiosignal auch eine Lautsprecherdurchsage aufweist.
- Signallaufzeitanalyse.
   ∘ durch die Signallaufzeitanalyse wird Widerhall identifiziert. Bestandteile des Audiosignals, denen ein Widerhallwert über einer zuvor festgelegten Dauer zugeordnet werden kann, typischerweise in Millisekunden, werden aussortiert und für das reduzierte Audiosignal nicht in Betracht gezogen. Dieses Verfahren ist beispielsweise bei Bahnhofdurchsagen besonders gut geeignet, da Bahnhofsdurchsagen auch mit einer natürlichen Stimme und gegebenenfalls mit einer relativ hohen Lautstärke getätigt werden.

Jede einzelne der genannten Analysemethoden bietet eine effiziente Möglichkeit, das ursprüngliche Audiosignal im Hinblick auf eine Beibehaltung der Bestandteile, die vor dem Nutzer kommen, zu filtern. Je nach Art der Umgebungsgeräusche, respektive der Hintergrundgeräusche, und auch je nach Eigenschaften des Nutzers, beispielsweise wie klar er in das Endgerät spricht, kann eine der Analysemethoden besser geeignet sein als eine andere der Analysemethoden. Die Verwendung nur einer einzelnen Analysemethode kann zu einer Reduzierung der Berechnungsdauer durch den Algorithmus bei der Generierung des reduzierten Audiosignals führen. Dies ist für den Nutzer in der Regel wünschenswert, da er eine Verarbeitung seines Sprachbefehls möglichst in Echtzeit erwartet.

Im weiteren Verlauf des Algorithmus können ASR-NLU-Services genutzt werden, die dabei helfen das Ergebnis anhaltend zahlreiche Kriterien weiter zu verfeinern. So nutzt die ASR Möglichkeiten Satzfragmente zu erkennen, die im Gesamtkontext keinen semantischen Sinn ergeben. So kann zum Beispiel ein Satz wie "Hallo Magenta, bitte spiele ,Vorsicht auf Gleis eins, Zug fährt ein' was Nettes von Bon Jovi" durch semantische Analyse auf den eigentlich gewünschten Befehl "Hallo Magenta, bitte spiele was Nettes von Bon Jovi" reduziert werden. Vorzugsweise können während der gesamten Bearbeitungszeit durch den Algorithmus, die Originaldaten sowie die reduzierten Daten pro Optimierung im Zugriff gehalten werden, um gegebenenfalls, wie nachstehend erläutert wird, eine Rückwärtslogik implementieren zu können. Die Rückwärtslogik kann dann effizient sein, wenn der virtuelle Sprachassistent keinen Sprachbefehl auffinden kann, der dem extrahierten Sprachbefehl zuordenbar ist. Zur Optimierung des Laufzeitverhaltens können auch mehrere Varianten des Analyseverfahrens parallel durchgerechnet und dasjenige Ergebnis mit der höchsten übereinstimmenden Wahrscheinlichkeit im Hinblick auf den "wahren" beabsichtigten Sprachbefehl des Nutzers ausgeführt werden.

In einem Ausführungsbeispiel werden die vorgehend genannten Analysemethoden beliebig miteinander kombiniert.

Dies bietet den Vorteil, dass sich die jeweiligen "Stärken" der einzelnen Analyse Methoden zu einem Synergieeffekt ergänzen, der dazu führt, dass das ursprüngliche Audiosignal noch deutlich effizienter im Hinblick auf die Stimme des Nutzers gefiltert werden kann.

Zweckmäßig ermittelt der Algorithmus eine Wahrscheinlichkeit, dass es sich bei dem aus dem reduzierten Audiosignal ermittelten Sprachebefehl um einen wirklichen Sprachbefehl handelt. Insbesondere kann der Algorithmus hierzu den extrahierten Sprachbefehl mit vergangenen Sprachbefehlen des Nutzers vergleichen. Liegt die Wahrscheinlichkeit über einen vordefinierten Schwellenwert, dass es sich um einen beabsichtigten Sprachbefehl handelt, so wird der Sprachbefehl durch den virtuellen Sprachassistenten ausgeführt. Falls nicht, können weitere Maßnahmen durch den Algorithmus ergriffen werden.

In einem bevorzugten Ausführungsbeispiel wird das reduzierte Audiosignal dem Algorithmus wiederum als Input übergeben, um ein reduziertes Audiosignal einer weiteren Stufe als Output zu erzeugen. Das Audiosignale der weiteren Stufe ist insbesondere ein reduziertes Audiosignal der Stufe 1, ein Audiosignal der Stufe eins können wiederum als Input verwendet werden, um ein Audiosignal der Stufe 2 zu erzeugen. Dies kann prinzipiell n-mal durchgeführt werden, um ein Audiosignal der Stufe n zu erzeugen. Hierbei steht eine höhere Stufenzahl dafür, dass es entsprechend Audiosignal weiterverarbeitet, respektive weiter reduziert wurde. Insbesondere können solche weiteren Stufen erzeugt werden, wenn festgestellt wird, dass das zuletzt erzeugte reduzierten Audiosignal unter dem vordefinierten Schwellenwert liegt, dass es sich um einen beabsichtigten Sprachbefehl handelt. Es gibt hierbei prinzipiell mehrere Möglichkeiten, um effizient reduzierte Audiosignale der weiteren Stufen zu erzeugen. Im Vergleich zu dem erzeugten Audiosignal der vorherigen Stufe, können die Parameter der Analysemethode weiter verfeinert werden und/oder es werden andere Analysemethoden verwendet und/oder die Analysemethoden werden auf eine andere Art und Weise miteinander kombiniert.

Bevorzugt werden die reduzierten Audiosignale jeder weiteren erzeugten Stufe ebenfalls auf der Speichereinheit gespeichert. Dies bietet den Vorteil, dass schnell auf die entsprechenden Ergebnisse zurückgegriffen werden kann, falls die jeweiligen erzeugten reduzierten Audiosignale der verschiedenen Stufen miteinander verglichen werden sollen.

In einer bevorzugten Ausführungsform wird das reduzierte Audiosignal der weiteren Stufe zum Extrahieren der Sprachebefehle für den virtuellen Sprachassistenten verwendet wird. Anstelle des ursprünglich erzeugten reduzierten Audiosignal, wird also das reduzierte Audiosignal einer der weiteren Stufe zum Extrahieren der Sprachbefehle verwendet. Insbesondere wird das reduzierte Audiosignal derjenigen Stufe verwendet, der mit der höchsten Wahrscheinlichkeit ein beabsichtigter Sprachbefehl des Nutzers zugeordnet werden kann. Dies bietet den Vorteil, dass effizient eine Auswahl aus verschiedenen reduzierten Audiosignalen stattfinden kann, wobei die Auswahl zugleich mit einer hohen Wahrscheinlichkeit dem beabsichtigten Sprachbefehl des Nutzers entspricht.

In einem Ausführungsbeispiel ist das reduzierte Audiosignal einer weiteren Stufe generierbar, indem der Algorithmus erneut auf das reduzierte Audiosignal angewendet wird und/oder indem der Algorithmus eine andere Analysenmethode und/oder eine andere Kombination der Analysenmethode anwendet. Insbesondere können also die Parameter der Analyse verfeinert werden. Dies bietet eine effiziente Möglichkeit die reduzierten Audiosignale der zumindest einen weiteren Stufe zu erhalten. An dieser Stelle soll einmal betont werden, dass im Normalfall für den Nutzer eine Echtzeitanalyse erstrebenswert ist, sodass nur dann reduzierte Audiosignale der weiteren Stufen erzeugt werden, wenn der Algorithmus ermittelt, dass das zuletzt erzeugte reduzierte Audiosignal mit einer vorbestimmten Wahrscheinlichkeit kein beabsichtigter Sprachbefehl des Nutzers ist.

Bevorzugt wird eine Reihenfolge bezüglich der Anwendung der verschiedenen Analysemethoden festgelegt, wobei die Reihenfolge hinsichtlich einer möglichsten kurzen Zeitdauer bis zum Erhalt des Outputs festgelegt ist. Dies bietet den Vorteil, dass der Sprachbefehl des Nutzers möglichst schnell an den virtuellen Sprachassistenten übermittelt werden kann und möglichst in quasi Echtzeit bearbeitet wird.

In einem Ausführungsbeispiel ist die Analyse auf dem Endgerät oder auf einem Server in einem Kommunikationsnetzwerk durchführbar. Die Analyse auf dem Endgerät bietet den Vorteil, dass keine Daten über das Kommunikationsnetzwerk versendet werden müssen, und dass die Analyse quasi sofort auf dem Endgerät stattfinden kann. Auf der anderen Seite stehen auf einem Server in dem Kommunikationsnetzwerk zumeist mehr Rechenressourcen und Daten zur Verfügung, die bei der Analyse hilfreich sein können. Je nach der konkreten Ausgestaltung des Endgeräts und den verfügbaren Ressourcen auf dem Server, liefert die eine oder die andere Variante das reduzierte Audiosignal. So ist es vorteilhaft, wenn auf dem Endgerät Spezifikationen des Servers hinterlegt sind, sodass das Endgerät entscheiden kann, in welcher Variante das reduzierte Audiosignal schneller vorliegt. In dem Endgerät kann eine Logik implementiert sein, die entscheidet welche Variante gewählt wird.

Ein weiterer Faktor für die Wahl der Variante hängt auch davon ab, welche Netzwerk-Performance aktuell für das Endgerät vorliegt. Ist beispielsweise nur eine langsame Datenverbindung mit schlechter Signalqualität vorhanden, entscheidet die Logik, dass die Verarbeitung des Audiosignals auf dem Endgerät ausgeführt wird. Bei einer hohen Signalstärke und einer hohen Bandbreite (z. B. 5G), kann die Logik das Audiosignal zur Verarbeitung an den Server senden. Die Logik kann hierbei auch berücksichtigen, wie "teuer" eine Datenübertragung für den Nutzer ist. Hierbei gilt die Regel, dass WiFi Verbindungen für den Nutzer deutlich günstiger sind als Mobilfunkverbindungen.

In einem Ausführungsbeispiel ist in dem Algorithmus eine rückwärtsgerichtete Logik implementiert, die wieder auf ein reduziertes Audiosignal einer vorherigen Stufe zurückgreift. Dies bietet den Vorteil, dass auch auf vorherige Ergebnisse zurückgegriffen kann, wenn sich ergibt, dass das reduzierte Signal einer höheren Stufe ein schlechteres Ergebnis als das reduzierte Signal einer vorherigen Stufe ergibt.

Gemäß einem zweiten Aspekt der Erfindung ist ein Endgerät angegeben auf dem ein virtueller Sprachassistent implementiert ist, wobei der virtuelle Sprachassistent eingerichtet ist zur Durchführung eines der vorstehend beschriebenen Verfahren.

Die sich ergebenden Vorteile sind im Wesentlichen analog zu den vorstehend beschriebenen Vorteilen im Zusammenhang mit dem erfindungsgemäßen Verfahren.

Gemäß einem dritten Aspekt der Erfindung ist ein Computerprogrammprodukt angegeben. Das Computerprogrammprodukt für einen virtuellen Sprachassistenten ausgebildet und eingerichtet zur Durchführung eines der vorstehend beschriebenen Verfahren.

Die sich ergebenden Vorteile sind im Wesentlichen analog zu den vorstehend beschriebenen Vorteilen im Zusammenhang mit dem erfindungsgemäßen Verfahren.

Im Folgenden werden bevorzugte Ausführungsbeispiele der vorliegenden Erfindung unter Bezugnahme auf die begleitenden Figuren erläutert:
- Fig. 1:: zeigt ein Kommunikationssystem mit einem Endgerät auf dem das erfindungsgemäße Verfahren abläuft.
- Fig. 2:: zeigt das Flussdiagramm des erfindungsgemäßen Verfahrens.
Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist und sofern der sich ergebende Gegenstand in den Schutzbereich der Ansprüche fällt.

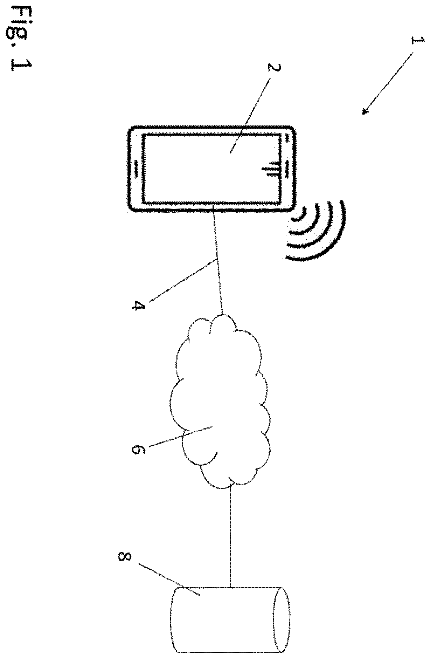

Fig. 1 zeigt ein Kommunikationssystem 1 mit einem Endgerät 2 auf dem das erfindungsgemäße Verfahren zumindest teilweise abläuft. Das Endgerät 2 ist über eine Datenverbindung 4 mit einem Kommunikationsnetz 6, insbesondere dem Internet 6, verbunden, wobei das Kommunikationsnetz 6 ebenfalls die Datenverbindung 4 zu einem Server 8 bereitstellt. Das erfindungsgemäße Verfahren, welches nachstehend erläutert wird, kann prinzipiell auf dem Endgerät 2 aber auch auf dem Server 8 implementiert als Algorithmus 10 sein. Audiosignale werden von dem Endgerät 2 mittels eines eingebauten Mikrofons aufgezeichnet und als Input dem auf dem Endgerät 2 und/oder dem Server 8 vorgesehenen Algorithmus 10 übergeben. Der Algorithmus 10 bearbeitet, wie nachstehend erläutert, das ursprüngliche Audiosignal und extrahiert aus diesem Sprachbefehle eines Nutzers, die in dem ursprünglichen Audiosignal vorhanden sind. Diese Sprachbefehle werden an den virtuellen Sprachassistenten übergeben und entsprechend ausgeführt.

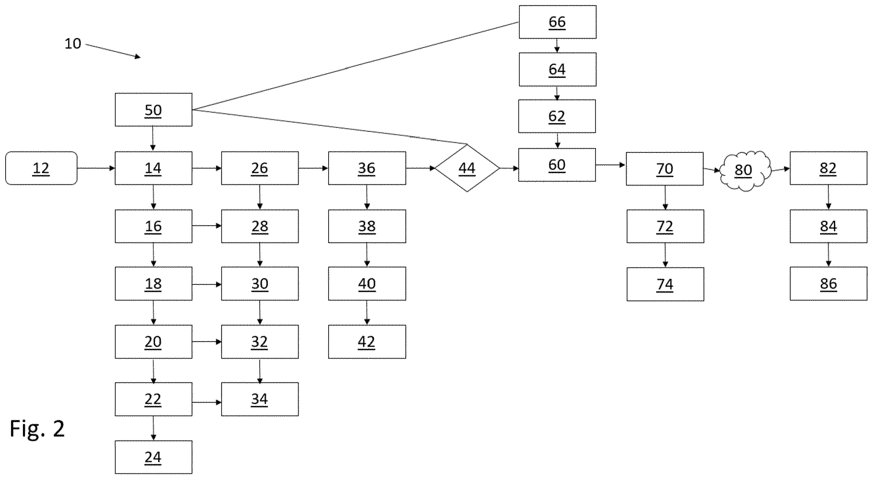

Fig. 2 zeigt ein Flussdiagramm des Algorithmus.

Schritt 12: das ursprünglich aufgezeichnete Audiosignal wird dem Algorithmus 10 als Input übergeben.

Schritt 14: eine Segregation der Stimme des Nutzers wird durch den Algorithmus 10 durchgeführt. Hierbei kann der Algorithmus folgende Analysemethoden anwenden. Bevorzugt werden diese nacheinander in der folgenden Reihenfolge angewendet:
- Frequenz-Analyse 16 (auch Bandbreitenanalyse genannt): hierbei wird das ursprüngliche Audiosignal zunächst in Frequenzbereiche unterteilt, die menschliche Stimmen enthalten können (ca. 500 Hz bis 4,5 kHz) sowie in restliche Frequenzbänder, in denen die übrigen Signale aufgeteilt werden, die beispielsweise vor Hintergrund Geräuschen stammen können. Die Hintergrundgeräusche können jedoch zur späteren Kontextanalyse weiterverwendet werden.
- Beamforming 18: durch das Beamforming 18 wird unter den (verbleibenden) Stimmenanteilen die Richtung ermittelt aus der das Signal kam (sofern dies auf HW Ebene möglich ist).
- Hallanalyse 20 (auch Signallaufzeitanalyse 20): der zeitliche Versatz des gleichen Signals wird, vorzugsweise im Millisekunden Bereich, als Widerhall identifiziert, um externe Signale, wie beispielsweise Lautsprecherdurchsagen an Bahnhöfen oder Flughäfen und laute Umgebungsgeräusche in Hallen, zu identifizieren.
- Abgleich mit vorherigen Eingaben 22: es erfolgt ein Abgleich mit zuletzt gesprochenen Sprachbefehlen im Hinblick auf Stimme, Sprechgeschwindigkeit und ähnliches, also eine Sprachprofil-Analyse 22, um zuverlässiger bestimmen zu können, welche Bestandteile des Audiosignals von dem Nutzer stammen.
- Kanal-Analyse 24: es kann zudem analysiert werden über welchen Kanal das Audiosignal empfangen wurde. Wurde das Audiosignal über ein Bluetooth Headset, über einen Speaker, über ein Mikrofon oder über eine Freisprechanlage empfangen.

In Schritt 26 werden die Erkenntnisse aus den verschiedenen Analysemethoden verwendet, um die Anteile des Audiosignals, der nicht zur Stimme des Nutzers gehören, herauszurechnen.

Schritt 28 zeigt den Effekt der Frequenzanalyse 16: die Frequenzbereiche, die Menschen nicht zugeordnet werden können, werden entfernt. Insbesondere alle Frequenzbereiche außerhalb ca. 500 Hz bis 4,5 kHz.

Schritt 30 zeigt den Effekt des Beamformings 18: die Signalanteile, die Richtungen zugeordnet werden können, die wahrscheinlich nicht von dem Nutzer kommen, werden aus dem ursprünglichen Audiosignal entfernt.

Schritt 32 zeigt den Effekt der Hallanalyse 20: die Signalbestandteile, die Halleffekte aufweisen, werden entfernt.

Schritt 34 zeigt den Effekt der Sprachprofil Analyse 24: die Stimmen, die nicht mit dem Sprachprofil des Nutzers übereinstimmen, werden entfernt. Die Klassifikation kann auf Basis von vorherigen, korrekten Sprachproben durchgeführt werden.

Als Output wird in Schritt 26 ein reduziertes Audiosignal erzeugt.

Während der Verarbeitung der Daten können alle Bestandteile des ursprünglichen Audiosignals, insbesondere auch die entfernten Bestandteile, erhalten bleiben, indem die entfernten Bestandteile beispielsweise separat in einer Speichereinheit auf dem Endgerät zwei gesichert werden. Dies bietet den Vorteil, dass prinzipiell bei nachfolgenden Analysen auf die gesamte Information des ursprünglichen Audiosignals zurückgegriffen werden kann.

In Schritt 36 erfolgt eine Kontextanalyse des reduzierten Audiosignals, gegebenenfalls unter Einbeziehung der entfernten Bestandteile des Audiosignals. Hierdurch können zusätzliche Informationen für die Verarbeitung des Sprachbefehls gewonnen werden, wie etwa:
- Schritt 38: wurden mehrere unterschiedliche Stimmen erkannt? Befinden sich mehrere Personen im Raum?
- Schritt 40: Machine-Learning basierte Klassifizierung um gegebenenfalls die Örtlichkeit zu ermitteln, in der sich der Nutzer gerade befindet. Beispielsweise in einem Bahnhof, 1 bar, einem Flughafen, in einem Auto, auf einer Straße, in einem Büro, etc.
- Schritt 42: die Stimme des Nutzers selbst kann mittels Machine-Learning dahingehend analysiert werden, ob bestimmte Merkmale klassifiziert werden können, die eine Gemütslage des Nutzers erkennen lassen (ärgerlich, gestresst, müde, etc.).

Die Informationen aus der Kontextanalyse können im weiteren Verlauf der Verarbeitung der Daten verwendet werden, um entsprechende Antworten zu erzeugen, bzw. die Absicht des Nutzers besser erkennen zu können. Weiterhin können bestimmte Kontext Informationen auch als Parameter für eine Eingabe für einen Sprachbefehl dienen. Beispielsweise kann hierfür die aktuelle Lokalität verwendet werden. Auch die Lautstärke der Ausgabe kann entsprechend dynamisch an den Ort angepasst werden, beispielsweise lauter am Bahnhof und leiser im Home-Office)

In der Verzweigung 44 wird analysiert, ob ein passender Stimmanteil für den Sprachbefehl erkannt wurde. Ist dies nicht der Fall, so führt die Verzweigung zu Schritt 50, wobei die Analyse erneut mit angepassten Parametern der jeweiligen Analysemethoden durchgeführt wird. Konnte ein passender Stimmanteil des Nutzers für den Sprachbefehl erkannt werden, so führt die Verzweigung zu Schritt 60.

In Schritt 60 kann prinzipiell auf alle Daten aus den vorangegangenen Schritten während der gesamten Verarbeitung zurückgegriffen werden. Es können Anpassungen auf Basis der Ergebnisse im weiteren Verlauf erfolgen. In Schritt 60 wird "ASR" angewendet.

Schritt 62: die ASR kann das passende Modell für die identifizierte Umgebung in der das Audiosignal aufgenommen wurde aktivieren. Es gibt spezielle Modelle für Bahnhof, Auto, etc.

Schritt 64: Die Transkription des reduzierten Audiosignals erfolgt unter Einbeziehung der ermittelten Parameter.

In Schritt 66 wird der Text im Hinblick auf semantische Unstimmigkeiten hin untersucht. Beispielsweise ergeben Sätze wie "mache das Radio wärmer" oder "stelle das Wasser laut" keinen Sinn. Hierdurch können eventuelle Überlappungen erkannt werden. Sollten hier Unstimmigkeiten auffallen, geht der Algorithmus wieder zurück zu Schritt 50 und passt Parameter der Analysemethoden entsprechend an, sodass ein anderes reduziertes Audiosignal erzeugt wird das diese Unstimmigkeiten nicht aufweist.

In Schritt 70 wird "NLU" angewendet. Die NLU wird ebenfalls durch die ermittelten Kontext Informationen unterstützt. In Schritt 72 kann beispielsweise die Erkennung eines Intents verbessert werden, beispielsweise durch Einbeziehung des Ortes. In Schritt 74 kann eine "Entity Erkennung" durchgeführt werden.

Nachdem die Schritte 72 und 74 durchgeführt wurden können die Daten zusammen mit dem Kontext und Analysedaten an den "Skill" 80 als

Sprachbefehl für den virtuellen Sprachassistenten gesendet werden. In Schritt 80 wird also der extrahierte Sprachbefehl des Nutzers ausgeführt.

Die Antwort auf den Sprachbefehl wird dem Nutzer in Schritt 82 in Form von "TTS" ausgegeben. Die Erzeugung der Sprachausgabe kann die Kontextinformationen nutzen, um die Lautstärke der Antwort zu justieren (Schritt 84) sowie auf die Stimmungslage des Sprechers einzugehen (Schritt 86). Auf die Stimmungslage des Sprechers kann beispielsweise eingegangen werden, indem ein möglichst empathisch wirkender Sprachassistenten gewählt wird. Für bestimmte Szenarien kann es nützlich sein, eine andere Stimme zu verwenden, die unter schlechten Bedingungen besser verstanden werden kann, wie beispielsweise eine andere Sprachgeschwindigkeit oder eine andere Frequenz der Stimme des Sprechers.

## Patentansprüche

1. Verfahren zur Verbesserung der Erkennungsgenauigkeit eines virtuellen Sprachassistenten bei Sprachbefehlen von einem Nutzer, wobei der virtuelle Sprachassistent auf einem Endgerät des Nutzers implementiert ist und mit einem Mikrofon des Endgeräts die Sprachbefehle des Nutzers empfängt, wobei das Verfahren die folgenden Schritte umfasst:
• Aufzeichnen eines empfangenen Audiosignals durch das Mikrofon des Endgeräts und Speichern des empfangenen Audiosignals in einer Speichereinheit;
• Übergeben des empfangenen Audiosignals an einen auf einer Recheneinheit implementierten Algorithmus als Input;
• Analysieren des Audiosignals mittels des Algorithmus, wobei der Algorithmus eingerichtet ist, eine Analyse des eingehenden Audiosignals durchzuführen und hierbei zu ermitteln, welche Bestandteile des Audiosignals von dem Nutzer stammen und ein reduziertes Audiosignal als Output auszugeben;
• Extrahieren zumindest eines Sprachebefehls für den virtuellen Sprachassistenten aus dem reduzierten Audiosignal,
wobei das Audiosignal nach der Analyse so bearbeitet wird, dass Bestandteile des Audiosignals detektiert werden, die mit einem vorher festgelegten Wahrscheinlichkeitswert dem Nutzer zuzuordnen sind,
wobei die anderen Bestandteile des Audiosignals, die unter diesem Wahrscheinlichkeitswert liegen, durch den Algorithmus als nicht-relevant markiert werden,
wobei das reduzierte Audiosignal aus den Bestandteilen zusammengesetzt wird, die über dem zuvor festgelegten Wahrscheinlichkeitswert liegen, wobei die Zusammensetzung in der chronologischen Reihenfolge erfolgt in der die einzelnen Bestandteile in dem ursprünglichen Audiosignal vorzufinden sind.

2. Verfahren nach Anspruch 1, **dadurch gekennzeichnet, dass** zumindest eine der folgenden Analysenmethoden in dem Algorithmus implementiert sind:
• Vergleichsanalyse mit einem hinterlegten Sprachprofil des Nutzers;
• Frequenzanalyse;
• Beamforming-Analyse;
• Positions-Analyse;
• Signallaufzeitanalyse.

3. Verfahren nach Anspruch 2, **dadurch gekennzeichnet, dass** die vorgehend genannten Analysemethoden beliebig miteinander kombiniert werden können.

4. Verfahren nach einem der vorhergehenden Ansprüche, **dadurch gekennzeichnet, dass** der Algorithmus eine Wahrscheinlichkeit ermittelt, dass es sich bei dem ermittelten Sprachebefehl um einen wirklichen Sprachbefehl handelt.

5. Verfahren nach einem der vorhergehenden Ansprüche, **dadurch gekennzeichnet, dass** das reduzierte Audiosignal dem Algorithmus wiederum als Input übergeben wird, um ein reduziertes Audiosignal einer weiteren Stufe als Output zu erzeugen.

6. Verfahren nach Anspruch 5, **dadurch gekennzeichnet, dass** das reduzierte Audiosignal der weiteren Stufe auf der Speichereinheit gespeichert wird.

7. Verfahren nach einem der Ansprüche 5 bis 6, **dadurch gekennzeichnet, dass** das reduzierte Audiosignal der weiteren Stufe zum Extrahieren der Sprachebefehle für den virtuellen Sprachassistenten verwendet wird.

8. Verfahren nach einem der Ansprüche 5 bis 7, **dadurch gekennzeichnet, dass** das reduzierte Audiosignal einer weiteren Stufe generierbar ist, indem der Algorithmus erneut auf das reduzierte Audiosignal angewendet wird und/oder indem der Algorithmus eine andere Analysenmethode und/oder eine andere Kombination der Analysemethoden anwendet.

9. Verfahren nach einem der Ansprüche 2 bis 8, **dadurch gekennzeichnet dass** eine Reihenfolge bezüglich der Anwendung der verschiedenen Analysemethoden festgelegt wird, wobei die Reihenfolge hinsichtlich einer möglichsten kurzen Zeitdauer bis zum Erhalt des Outputs festgelegt ist.

10. Verfahren nach einem der vorhergehenden Ansprüche, **dadurch gekennzeichnet, dass** die Analyse auf dem Endgerät oder auf einem Server in einem Kommunikationsnetzwerk durchführbar ist.

11. Verfahren nach Anspruch 9, **dadurch gekennzeichnet, dass** die Analyse auf dem Server durchgeführt wird, wenn eine ausreichende Netzwerkperformance vorliegt.

12. Verfahren nach einem der vorhergehenden Ansprüche, **dadurch gekennzeichnet, dass** eine rückwärtsgerichtete Logik in den Algorithmus implementiert ist, die wieder auf ein reduziertes Audiosignal einer vorherigen Stufe zurückgreift.

13. Endgerät auf dem ein virtueller Sprachassistent implementiert ist, wobei der virtuelle Sprachassistent eingerichtet ist zur Durchführung eines der Verfahren nach einem der Ansprüche 1-12.

14. Computerprogrammprodukt geeignet um einen virtuellen Sprachassistenten auszubilden und eingerichtet zur Durchführung eines Verfahrens nach einem der Ansprüche 1 - 12.

## Claims

1. Method for improving the recognition accuracy of a virtual speech assistant for voice commands from a user, wherein the virtual speech assistant is implemented on a user's terminal device and receives the user's voice commands with a microphone of the terminal device, wherein the method comprises the following steps:
• recording a received audio signal through the microphone of the terminal device and storing the received audio signal in a storage unit;
• transferring the received audio signal to an algorithm implemented on a computing unit as input;
• analysing the audio signal using the algorithm, wherein the algorithm is designed to perform an analysis of the incoming audio signal and thereby determine which components of the audio signal originate from the user, and to output a reduced audio signal as output;
• extracting at least one voice command for the virtual speech assistant from the reduced audio signal,
wherein the audio signal is processed after analysis in such manner that components of the audio signal that are assignable to the user with a previously fixed probability level are detected,
wherein the other components of the audio signal, which lie below this probability level, are marked as not relevant by the algorithm,
wherein the reduced audio signal is compiled from the components that lie above the previously fixed probability level,
wherein the compilation is carried out in the chronological order in which the individual components are present in the original audio signal.

2. Method according to Claim 1, **characterized in that** at least one of the following analysis methods is implemented in the algorithm:
• comparison analysis with the user's store speech profile;
• frequency analysis;
• beamforming analysis;
• position analysis;
• signal propagation analysis.

3. Method according to Claim 2, **characterized in that** the analysis methods cited previously can be combined with each other in any permutation.

4. Method according to any one of the preceding claims, **characterized in that** the algorithm determines a probability that the detected voice command is a real voice command.

5. Method according to any one of the preceding claims, **characterized in that** the reduced audio signal is transferred to the algorithm again as input in order to generate a reduced audio signal of a further stage as output.

6. Method according to Claim 5, **characterized in that** the reduced audio signal of the further stage is stored on the storage.

7. Method according to any of Claims 5 to 6, **characterized in that** the reduced audio signal of the further stage is used to extract the voice commands for the virtual speech assistant.

8. Method according to any one of Claims 5 to 7, **characterized in that** the reduced audio signal of a further stage can be generated if the algorithm is applied to the reduced audio signal again, and/or if the algorithm applies a different analysis method and/or a different analysis method combination.

9. Method according to any one of Claims 2 to 8, **characterized in that** a sequence with regard to the application of the various analysis methods is defined, wherein the sequence is defined with a view to a shortest possible period until receipt of the output.

10. Method according to any one of the preceding claims, **characterized in that** the analysis can be carried out on the terminal device or on a server in a communication network.

11. Method according to Claim 9, **characterized in that** the analysis is carried out on the server when the network performance is sufficient therefor.

12. Method according to any one of the preceding claims, **characterized in that** a backward-looking logic is implemented in the algorithm, and is re-applied to a reduced audio signal of a previous stage.

13. Terminal device on which a virtual speech assistant is implemented, wherein the virtual speech assistant is configured to carry out one of the methods according to any one of claims 1-12.

14. Computer software product designed to embody a virtual speech assistant and configured to carry out a method according to any one of Claims 1-12.

## Revendications

1. Procédé pour améliorer la précision de détection d'un assistant linguistique virtuel en présence des commandes vocales d'un utilisateur, dans lequel l'assistant linguistique virtuel est implémenté sur un terminal de l'utilisateur et reçoit les commandes vocales de l'utilisateur avec un microphone du terminal, dans lequel le procédé comprend les étapes suivantes consistant à :
• enregistrer un signal audio reçu via le microphone du dispositif terminal et mémoriser le signal audio reçu dans une unité de mémorisation ;
• transférer le signal audio reçu vers un algorithme implémenté sur une unité de calcul comme entrée ;
• analyser le signal audio à l'aide de l'algorithme, dans lequel l'algorithme est configuré pour effectuer une analyse du signal audio entrant et ainsi déterminer quelles composantes du signal audio proviennent de l'utilisateur et émettre un signal audio réduit comme sortie ;
• extraire au moins une commande vocale pour l'assistant linguistique virtuel du signal audio réduit,
dans lequel le signal audio est traité après analyse de telle manière des composantes du signal audio soient détectées à l'aide d'une valeur de probabilité spécifiée est attribuée à l'utilisateur,
dans lequel les autres composantes du signal audio qui sont inférieures à cette valeur de probabilité, sont marquées par l'algorithme comme non pertinentes,
dans lequel le signal audio réduit est composé des composantes qui sont au-dessus de la valeur de probabilité prédéterminée,
dans lequel la composition a lieu dans la séquence chronologique dans laquelle les composantes individuelles peuvent être trouvées dans le signal audio d'origine.

2. Procédé selon la revendication 1, **caractérisé en ce qu'**au moins un des procédés d'analyse suivants est implémenté dans l'algorithme :
• analyse comparative avec un profil linguistique enregistré de l'utilisateur ;
• analyse fréquentielle ;
• analyse de formation de faisceau ;
• analyse de position ;
• analyse du temps de propagation du signal.

3. Procédé selon la revendication 2, **caractérisé en ce que** les procédés d'analyse mentionnés ci-dessus peuvent être combinés entre eux à volonté.

4. Procédé selon une quelconque des revendications précédentes, **caractérisé en ce que** l'algorithme détermine une probabilité que la commande vocale déterminée soit une commande vocale réelle.

5. Procédé selon une des revendications précédentes, **caractérisé en ce que** le signal audio réduit est à nouveau passé à l'algorithme en entrée pour générer un signal audio réduit d'un étage supplémentaire en sortie.

6. Procédé selon la revendication 5, **caractérisé en ce que** le signal audio réduit de l'étage supplémentaire est mémorisé sur l'unité de mémorisation.

7. Procédé selon une quelconque des revendications 5 à 6, **caractérisé en ce que** le signal audio réduit de l'étage supplémentaire est utilisé pour extraire les commandes vocales de l'assistant linguistique virtuel.

8. Procédé selon une quelconque des revendications 5 à 7, **caractérisé en ce que** le signal audio réduit d'un étage supplémentaire peut être généré, en appliquant à nouveau l'algorithme sur le signal audio réduit et/ou en appliquant à l'algorithme un procédé d'analyse différent et/ou une combinaison différente de procédés d'analyse.

9. Procédé selon une des revendications 2 à 8, **caractérisé en ce qu'**une séquence est établie en ce qui concerne l'application des différents procédés d'analyse, dans lequel la séquence est établie en ce qui concerne la période de temps la plus courte possible pour obtenir la sortie.

10. Procédé selon une des revendications précédentes, **caractérisé en ce que** l'analyse peut être effectuée sur le terminal ou sur un serveur dans un réseau de communication.

11. Procédé selon la revendication 9, **caractérisé en ce que** l'analyse est effectuée sur le serveur si les performances du réseau sont suffisantes.

12. Procédé selon une quelconque des revendications précédentes, **caractérisé en ce que** la logique arrière est mise en œuvre dans l'algorithme qui revient à un signal audio réduit d'une étape précédente.

13. Terminal sur lequel un assistant linguistique virtuel est implémenté, dans lequel l'assistant linguistique virtuel est configuré pour mettre en œuvre un des procédés selon une des revendications 1 à 12.

14. Produit de programme informatique convenant pour concevoir un assistant linguistique virtuel et configuré pour mettre en œuvre un procédé selon une des revendications 1 à 12.
